# EUROPÄISCHE PATENTSCHRIFT

(11) **EP 2 570 243 B1**
(45) Veröffentlichungstag und Bekanntmachung des Hinweises auf die Patenterteilung: **25.11.2015**
(21) Anmeldenummer: 12180848.9
(22) Anmeldetag: 17.08.2012
(51) Int. Cl.: B25J 15/00, B65G 47/90

(54) **Lochgreifer**
Hole gripper
Grappin pour trous

(30) Priorität: 16.09.2011 DE 202011105725 U; 16.05.2012 DE 102012208185
(43) Veröffentlichungstag der Anmeldung: 20.03.2013
(73) Patentinhaber: Schunk GmbH & Co. KG Spann- und Greiftechnik, 74348 Lauffen am Neckar (DE)
(72) Erfinder: Kirsten, Benjamin, 74336 Brackenheim (DE); Wütherich, Samuel, 74397 Pfaffenhofen (DE); Conz, Thomas, 74336 Brackenheim (DE)
(74) Vertreter: DREISS Patentanwälte PartG mbB

(56) Entgegenhaltungen:
- DE-A1- 4 432 253
- DE-C2- 4 134 478
- US-A1- 2009 108 605

## Beschreibung

Die Erfindung betrifft einen Lochgreifer mit einem Gehäuse, mit wenigstens einer einen Druckraum begrenzenden, bei Druckbeaufschlagung des Druckraums elastisch verformbaren Membran und mit einer mit der Membran verbundenen Backe, wobei die Backe bei Druckbeaufschlagung des Druckraums in radialer Richtung verlagerbar ist.

Derartige Lochgreifer sind beispielsweise aus der DE 41 34 478 C2 vorbekannt. Dort ragen die Backen in Form von Fingern durch den Gehäusemantel des Greifers hindurch. Der Greifer ist zudem mehrteilig aufgebaut. Weitere Lochgreifer oder ähnliche Greifvorrichtungen sind beispielsweise aus der DE 31 27 209 C2, der DE 10 2009 017 683 B3, der DE 102007 017 662 A1, der DE 298 10 563 U1, der EP 0 341 377 A2 oder der US 2009/0108605 A1 (DE 10 2005 046 160) bekannt. Der vorliegenden Erfindung liegt die Aufgabe zugrunde, einen bekannten Greifer so weiterzubilden, dass er zum einen einfach herstellbar und zum anderen funktionssicher arbeitet und insbesondere gewährleistet werden kann, dass die Backen eine definierte Einfahrlage einnehmen.

Diese Aufgabe wird durch einen Lochgreifer mit den Merkmalen des Anspruchs 1 gelöst. Insbesondere ist vorgesehen, dass das Gehäuse, die Membran und die Backe einstückig ausgebildet sind und dass die Anschlagabschnitte derart vorgesehen sind, dass die Backe in radial ausgefahrener Position eine definierte Ausfahrendlage und/oder in radial eingefahrener Position eine definierte Einfahrendlage einnehmen kann. Die Membran kann insbesondere faltenbalgartig ausgebildet sein.

Dadurch, dass das Gehäuse, die Membran und die Backe, und gegebenenfalls auch weitere Teile des Greifers, einstückig ausgebildet sind, ist eine Dichtheit in hohem Maße gewährleistet. Der Greifer kann dadurch funktionssicher arbeiten. Zudem wird durch Vorsehen der insbesondere am Gehäuse angebrachten Anlageabschnitte erreicht, dass eine definierte Lage der Backen vorgegeben werden kann.

Ferner ist vorteilhaft, wenn die Anschlagabschnitte derart vorgesehen sind, dass die Backe in radial eingefahrener Position eine definierte Einfahrendlage einnehmen kann. Die Anschlagabschnitte können dabei eine Doppelfunktion aufweisen, zum einen definieren sie dann die Einfahrendlage und zum anderen definieren sie die Ausfahrendlage. Zur Definition der Ausfahrendlage wirkt die Membran vorzugsweise gegen die Anschlagabschnitte.

Zudem ist vorteilhaft, wenn die Anschlagabschnitte derart ausgebildet sind, dass eine Beschädigung der Membran bei unerwünschtem Überdruck im Druckraum vermieden wird. Dies trägt zur erhöhten Funktionssicherheit des Greifers bei.

Vorteilhafterweise sind die Anschlagabschnitte derart angeordnet, dass sie wenigstens abschnittsweise zwischen der Membran und der Backe vorgesehen sind.

Ferner ist denkbar, dass das Gehäuse eine Backenausnehmung derart aufweist, dass die Backe in der Einfahrendlage bündig mit dem Gehäuse abschließt oder gegenüber dem Gehäuse in radialer Richtung zurückversetzt angeordnet ist. Dies hat den Vorteil, dass ein axiales Einführen des Lochgreifers in das Loch erfolgt, ohne dass die Backe auf die Lochkontur auftrifft oder an ihr verhakt.

Eine weitere besonders bevorzugte Ausführungsform sieht vor, dass die Membran über einen Verbindungsabschnitt mit der Backe derart verbunden ist, dass zwischen der Membran und der Backe ein Spaltraum vorgesehen ist. Dadurch kann erreicht werden, dass insbesondere die Abschnitte der Membran, die um den Verbindungsabschnitt herumliegen, elastisch ausgebildet werden können, um die Membran bei Druckbeauschlagung zu verformen. Dennoch kann die Backe gegen ein geeignetes Werkstück wirken.

Ferner ist denkbar, dass der Spaltraum als um den Verbindungsabschnitt umlaufender, in vom Verbindungsabschnitt abgewandter Richtung offener Ringspaltraum ausgebildet ist. Durch diese Anordnung ergibt sich eine vergleichsweise große Flexibilität der Membran. Dennoch kann die Backe vergleichsweise groß ausgebildet werden.

Zudem ist denkbar, dass sich der Verbindungsabschnitt im mittleren Bereich der Membran und/oder mittleren Bereich der Backe befindet.

Zur Realisierung der definierten Einfahrendlage und/oder Ausfahrendlage ist vorteilhaft, wenn die Anlageabschnitte in den Spaltraum eingreifen und vorzugsweise parallel zur Mittellängsachse des Loch-Greifers verlaufend ausgebildet sind.

Die Anlageabschnitte können dabei insbesondere von Stegabschnitten gebildet werden, wobei vorzugsweise zwei gegenüberliegende, weiter vorzugsweise von axial oben und axial unten in den Spaltraum eingreifende Stegabschnitte vorgesehen sind. Die Stegabschnitte erstrecken sich dabei vorzugsweise entlang einer geraden Linie und verlaufen parallel zur Mittellängsachse des Lochgreifers.

Bei einer weiteren Ausführungsform der Erfindung ist vorgesehen, dass das Gehäuse eine obere und/oder eine untere Endplatte aufweist, wobei an wenigstens einer Endplatte ein Anschlagabschnitt vorgesehen ist. Vorzugsweise sind in axialer Richtung zwei Endplatten vorgesehen, zwischen denen die wenigstens eine Backe mit Membran vorgesehen ist. Dadurch kann insbesondere in axialer Richtung die wenigstens eine Backe samt Membran geschützt angeordnet werden.

Die wenigstens eine Endplatte kann dabei wenigstens eine in Bewegungsrichtung der Backe verlaufende, den Anschlagabschnitt begrenzende Anschlagaussparung aufweisen, in welcher ein backen- oder membranseitig angeordneter Anschlagzapfen so eingreift, dass er in der Ausfahrendlage und/oder in der Einfahrendlage gegen den Anschlagabschnitt wirkt. Je nach Länge der Anschlagaussparung beziehungsweise Lage des jeweiligen Anschlagsabschnitts kann dadurch die Ausfahrendlage und/oder die Einfahrendlage vorgegeben werden.

Für den Fall, dass mehrere benachbart angeordnete Membranen mit jeweils zugehöriger Backe vorgesehen sind, ist denkbar, dass in der Endplatte zwei entlang der jeweiligen Bewegungsrichtung der jeweiligen Backe verlaufende, ineinander übergehende Anschlagaussparungen vorgesehen sind, wobei jede der Backen wenigstens einen Anschlagzapfen aufweist und die Anschlagzapfen der beiden Backen in der Einfahrendlage derart gegeneinander wirken, dass sie gegenseitig die Anschlagabschnitte bilden. Bei dieser Ausführungsform wird folglich die Bewegungsbegrenzung nach radial innen durch Aufeinandertreffen der Anschlagzapfen der benachbarten Backen realisiert. Die Anschlagzapfen bilden folglich die Anschlagabschnitte. Dabei ist denkbar, dass die einander zugewandten Seiten der Anschlagabschnitt so ausgebildet sind, dass die einander berührenden Oberflächen der Anschlagzapfen flächig aufeinander treffen; dadurch werden Spannungsspitzen in den Anschlagzapfen vermieden.

Ferner ist vorteilhaft, wenn wenigstens eine Endplatte beziehungsweise Backe auf der der Backe beziehungsweise Endplatte zugewandten Seite in axialer Richtung erhabene Stützabschnitte aufweist. Die Stützabschnitte sind dabei vorteilhafterweise so ausgebildet, dass sie in axialer Richtung hin zur Backe beziehungsweise Endplatte von dieser geringfügig beabstandet sind. Für den Fall, dass in axialer Richtung wirkende Kräfte auftreten, können sich allerdings die Backen an den Endplatten, über die Stützabschnitte, abstützen. Dadurch wird die Stabilität der Greifvorrichtung in axialer Richtung erhöht.

Ferner ist vorteilhaft, wenn die Eigenspannung der Membran derart ist, dass die Backe bei drucklosem Druckraum in Richtung Einfahrendlage verfährt. Bei dieser Ausbildung sind keine zusätzlichen Mittel erforderlich, die die Backe rückstellen. Allerdings ist denkbar, dass Federelemente vorgesehen sind, die die Backe in die Einfahrendlage drängen. Ferner ist denkbar, dass der Druckraum mit Unterdruck beaufschlagt wird, um ein Rückführen der Backen zu ermöglichen.

Bei einer weiteren vorteilhaften Ausführungsform ist vorgesehen, dass die Membran in der Einfahrendlage Wandabschnitte aufweist, die zwischen dem Gehäuse und der Backe leicht schräg zur Mittellängsachse derart verlaufend angeordnet sind, dass bei Druckbeaufschlagung ein Schnappscheibeneffekt auftreten kann und die Membran nach radial außen schnappt oder sich zumindest weiter nach radial außen bewegen kann. Hierdurch kann insbesondere der Hub der Backe vergrößert werden, was je nach Anwendung Vorteile mit sich bringt.

Dazu ist denkbar, dass die Membran in der Einfahrendlage und vorteilhafterweise auch in der Ausfahrendlage am Gehäuse im Wesentlichen parallel zur Mittellängsachse oder leicht schräg dazu angreift und vorzugsweise an der Backe im Wesentlichen senkrecht zur Mittellängsachse angreift. Durch eine derartige Anordnung kann der Schnappscheibeneffekt und/oder eine weiter nach radial außen reichende Hubbewegung noch verbessert werden. Die jeweiligen dünnwandigen Wandabschnitte der Membran können dann in axialer Richtung ausweichen, insbesondere in dem Bereich, an dem sie an der Backe angeordnet sind beziehungsweise in diese übergehen.

Weiterhin ist denkbar, dass die Membran in der Einfahrendlage und/oder der Ausfahrendlage im Wesentlichen senkrecht zur Mittellängsachse oder leicht schräg dazu am Gehäuse angreift und dazwischen faltenbalgartig ausgebildet ist. Dadurch kann insgesamt ein vergleichsweise großer Hub der jeweiligen Backe zurückgelegt werden.

Eine weitere vorteilhafte Ausbildung sieht vor, dass die mit der Membran verbundene Backe in Vorderansicht auf die Backe die Membran ganz oder wenigstens weitgehend überdeckt. Hierdurch wird die Membran durch die Backe geschützt, wodurch Beschädigungen der Membran vorgebeugt wird.

Ferner ist denkbar, dass der Druckraum im Querschnitt im Wesentlichen dreieckig ausgebildet ist und von drei Membranen begrenzt wird, wobei jede Membran mit einer Backe zusammenwirkt. Aufgrund der Dreiecksausbildung wirken die drei Backen symmetrisch auf das zu greifende Werkstück, wodurch ein definiertes Greifen möglich wird.

Dabei ist denkbar, dass der Lochgreifer im Querschnitt eine im Wesentlichen runde Außenkontur aufweist, wobei sich jede Backe über einen Bereich von 60° bis 120° und vorzugsweise über einen Bereich von 80° bis 95° erstreckt. Zwischen den Backen können sich dann in axialer Richtung verlaufende Längsstege erstrecken, die Teil des Gehäuses sind. Jeweils zwischen zwei Längsstegen befindet sich dann eine Backe.

Vorteilhafterweise sind die funktionswesentlichen Bestandteile des Lochgreifers alle einstückig ausgebildet und vorzugsweise aus dem gleichen Material. Das Gehäuse, die Membran und die Backe und gegebenenfalls weitere Bestandteile des Lochgreifers sind dabei vorzugsweise in einem generativen Herstellungsverfahren hergestellt. Unter generativen Herstellungsverfahren werden auch als Rapid Prototyping bezeichnete Verfahren zur schnellen und kostengünstigen Fertigung von Modellen, Mustern oder Prototypen verstanden. Die Fertigung erfolgt dabei auf Basis rechnerinterner Datenmodelle aus formlosem oder formneutralem Material mittels chemischer und/oder physikalischer Prozesse. Gerade ein solches Fertigungsverfahren hat sich bei Lochgreifern als besonders geeignet herausgestellt.

Bei einer weiteren Ausführungsform ist vorteilhaft, wenn an den Backen einstückig Greiffinger vorgesehen sind, die vorteilhafterweise unter Anwendung eines generativen Herstellungsverfahrens zusammen mit der Backe hergestellt sind.

Weitere Einzelheiten und vorteilhafte Ausgestaltungen der Erfindung sind der nachfolgenden Beschreibung zu entnehmen, anhand derer ein Ausführungsbeispiel der Erfindung näher beschrieben und erläutert ist. Es zeigen:
- Figur 1: einen Längsschnitt durch einen ersten erfindungsgemäßen Lochgreifer;
- Figur 2: einen Querschnitt durch den Lochgreifer gemäß Figur 1;
- Figur 3: eine Seitenansicht eines zweiten erfindungsgemäßen Löchgreifers;
- Figur 4: einen Längsschnitt durch den Lochgreifer gemäß Figur 3;
- Figur 5: einen Querschnitt durch den Lochgreifer gemäß Figur 3;
- Figur 6: die Seitenansicht eines dritten erfindungsgemäßen Lochgreifers;
- Figur 7: einen Längsschnitt durch den Lochgreifer gemäß Figur 6;
- Figur 8: eine Unteransicht des Lochgreifers gemäß Figur 6;
- Figur 9: einen Querschnitt durch den Lochgreifer gemäß Figur 6;
- Figur 10: eine perspektivische Ansicht des Lochgreifers gemäß Figur 6;
- Figur 11: einen vergrößerten Ausschnitt aus Figur 6 und
- Figur 12: eine vierte Ausführungsform eines erfindungsgemäßen Lochgreifers mit Greiffingern.

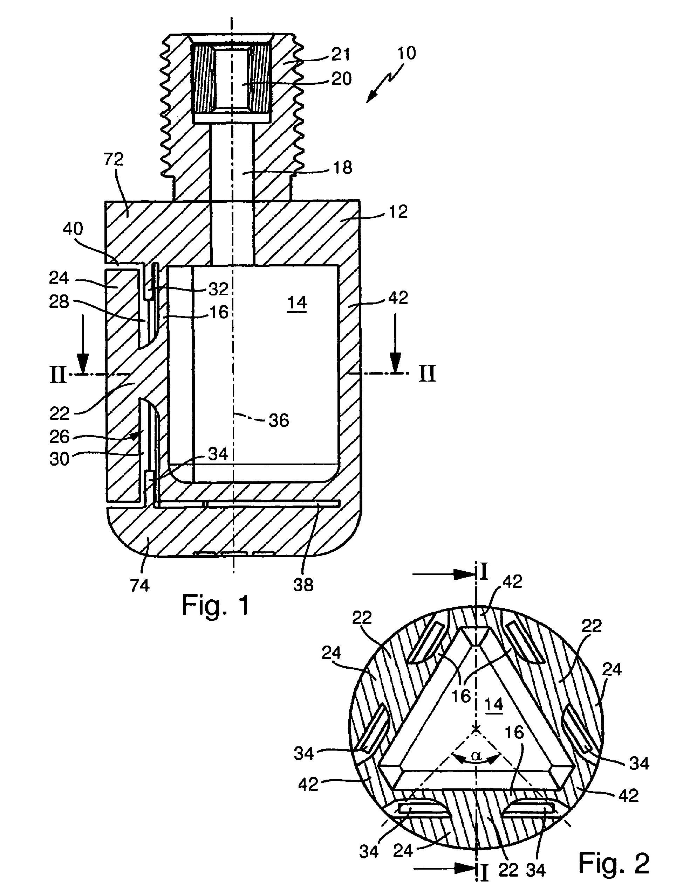

In der Figur 1 ist ein Längsschnitt durch einen Lochgreifer 10 dargestellt, der ein Gehäuse 12 und einen im Gehäuse 12 vorgesehenen Druckraum 14 umfasst. Der Druckraum 14 wird von insgesamt drei elastisch verformbaren Membranen 16 begrenzt. Der Druckraum 14 ist über eine Verbindungsleitung 18 mit einem Anschlussabschnitt 20, an den eine externe Druckleitung angeschlossen werden kann, verbunden. Der Anschlussabschnitt 20 befindet sich dabei innerhalb eines an dem Gehäuse 12 vorgesehenen Gewindebolzens 21.

Bei Druckbeaufschlagung des Druckraums 14 mit Überdruck verlagern sich die drei Membranen 16 nach radial außen. An den Membranen 16 sind über Verbindungsabschnitte 22 Backen 24 angeordnet. Die Backen 24 folgen also einer Radialbewegung der Membranen 16. Zwischen den Backen 24 und den Membranen 16 ist jeweils ein Spaltraum in Form eines um den jeweiligen Verbindungsabschnitt 22 umlaufenden Ringspaltraums 26 vorgesehen, wodurch Endplatten 72, 74 gebildet werden. Die Ringspalträume 26 umfassen dabei einen axial oberen Spaltraum 28 und einen axial unteren Spaltraum 30. Wie insbesondere aus dem Schnitt gemäß Figur 1 deutlich wird, sind am Gehäuse 12 Anlageabschnitte 32, 34 vorgesehen, wobei der Anlageabschnitt 32 in den oberen Spaltraum 28 eingreift und der Anlageabschnitt 34 in den unteren Spaltraum 30 eingreift. Die Anlageabschnitte 32 und 34 sind dabei als parallel zur Mittellängsachse 36 verlaufende Stegabschnitte ausgebildet. Dadurch, dass die Anlageabschnitte 32, 34 im Bereich zwischen der jeweiligen Membran 16 und der zugehörigen Backe 24 angeordnet sind, wird eine definierte Einfahrendlage vorgegeben. Bei Druckbeaufschlagung des Druckraums 14 werden die Membranen 16 in radialer Richtung bis zum Anschlagen gegen die Anschlagabschnitte 32, 34 verformt, wodurch die Backen 24 eine definierte Ausfahrendlage einnehmen.

Wie aus dem Schnitt gemäß Figur 1 deutlich wird, ist auch auf der dem Anschlussabschnitt 20 abgewandten Seite des Gehäuses 12 ein sich parallel zur Mittellängsachse verlaufender Querspalt 38 vorgesehen, wodurch Endplatten 72, 74 gebildet werden. Der Querspalt 38 dient dazu, eine ausreichende Verformbarkeit der jeweiligen Membranen zu gewährleisten.

Wie aus dem Querschnitt gemäß Figur 2 deutlich wird, bilden die drei Membranen 16 ein gleichseitiges Dreieck, das den Druckraum 14 in radialer Richtung begrenzt. Die Außenkontur des Lochgreifers 10 im Bereich der Backen 24 ist demgegenüber kreisrund, wobei sich jede Backe über einen Winkelbereich α von ca. 75° erstreckt. Zwischen den Backen 24 sind sich in axialer Richtung erstreckende Längsstege 42 vorgesehen.

Wie ferner aus den Schnitten gemäß Figur 1 und Figur 2 deutlich wird, decken die jeweiligen Backen 24 die ihnen zugeordnete Membranen 16 im Wesentlichen ab. Insofern sind die Membranen 16 durch die Backen 24 geschützt.

Wie zudem aus dem Schnitt gemäß Figur 1 deutlich wird, weist das Gehäuse 12 Backenausnehmungen 40 auf, die so ausgebildet sind, dass die Backen 24 in der Einfahrlage bündig oder gegenüber dem Gehäuse 12 in radialer Richtung zurückversetzt angeordnet sind. Wie bereits erwähnt, werden bei Druckbeaufschlagung des Druckraums die Membranen 16 nach radial außen so weit bewegt, bis die Backen 24 am zu greifenden Werkstück anliegen oder die Membranen 16 an den Anlageabschnitten 32, 34 zur Anlage kommen. Dies hat den Vorteil, dass auch bei gegebenenfalls vorliegenden Überdrücken eine ausreichende Stabilität der Greifvorrichtung 10 gegeben ist. Bei Drucklosschaltung des Druckraums 14 ist die Membran derart ausgebildet, dass sie aufgrund der Eigenspannung nach radial innen einrückt und die Backe 24 in die Einfahrlage und gegebenenfalls in die Einfahrendlage verlagert wird.

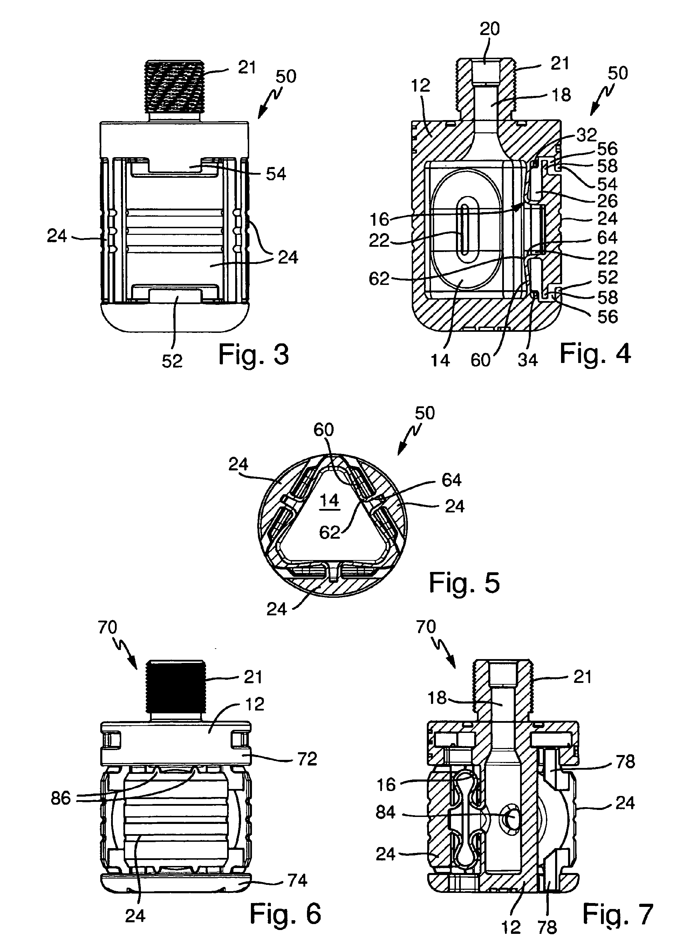

Das Gehäuse 12, die Membran 16 und die Backen 24, sowie die Anlageabschnitte 32 und 34 sowie gegebenenfalls auch der Gewindebolzen 21 sind vorzugsweise einstückig aus dem gleichen Material ausgebildet und in einem generativen Fertigungsverfahren, beispielsweise in Rapid Prototyping, hergestellt.
Der in den Figuren 3 bis 5 dargestellte Lochgreifer 50 entspricht im Wesentlichen dem in den Figuren 1 und 2 dargestellten Lochgreifer 10, wobei entsprechende Bauteile mit entsprechenden Bezugszeichen versehen sind.

Anders als beim Greifer 10 gemäß den Figuren 1 und 2 sind beim Greifer 50 gemäß den Figuren 3 bis 5 die

Anschlagabschnitte 32 und 34 nicht als Stegabschnitte, sondern als Schulterabschnitte ausgebildet. Durch sie wird die Einfahrendlage vorgegeben. Beim Greifer 50 sind zudem Anschlagabschnitte 52 und 54 am Gehäuse vorgesehen, die die Ausfahrendlage definieren. Die Anschlagabschnitte 52, 54 sind dabei stegartig und schließen auf ihrer radial äußeren Seite bündig mit dem Gehäuse ab. Zwischen den unteren Anschlagabschnitten 34 und 54 sowie zwischen den oberen Anschlagabschnitten 32 und 52 ist jeweils eine nutartige Ausnehmung 56, in die sich in axialer Richtung erstreckenden Endabschnitte 58 der Backen 24 eingreifen. In radialer Richtung können die Backen 24 folglich zwischen den jeweiligen Anschlagabschnitten 34 und 32 sowie 54 und 52 von der Einfahrendlage in die Ausfahrendlage bewegt werden.

Bei dem Greifer 50 ist die Eigenspannung der Membran 16 derart, dass die Backen 24 in ihre Einfahrendlage gedrängt werden. Die der jeweiligen Backe 24 zugeordnete Membran 16 weist, wie aus Figur 4 und 5 deutlich wird, zwischen dem Gehäuse 12 und der Backe 24 L-förmige Wandabschnitte auf, die einen leicht schräg zur Mittellängsachse verlaufenden ersten Wandabschnitt 60, einen sich daran anschließenden Bogenwandabschnitt 62 und einen weiteren sich daran anschließenden zweiten Wandabschnitt 64 umfassen. Der zweite Abschnitt 64 ist dabei im Wesentlichen senkrecht zur Mittellängsachse verlaufend angeordnet. Der Bogenabschnitt 62 verbindet die beiden Wandabschnitte 60 und 64.

Dadurch, dass der erste Wandabschnitt 60 leicht schräg zur Mittellängsachse und zwar vom Gehäuse ausgehend hin zur Mittellängsachse verläuft, kann bei Druckbeaufschlagung des Druckraums 14 ein Schnappscheibeneffekt erzielt werden, so dass die Backe 24 bei Überschreiten einer Schwellkraft nach radial außen schnappt. Im Gegensatz zum Greifer 10 gemäß Figur 1 und 2 kann hierdurch eine Hubvergrößerung der Backen 24 erzielt werden. Im Bereich des ersten Wandabschnitts 60 greift die Membran 16 folglich parallel beziehungsweise leicht schräg zur Mittellängsachse am Gehäuse 12 an. Im zweiten Wandabschnitt 64 greift die Membran an der Backe 24 im Wesentlichen senkrecht zur Mittellängsachse an.

In den Figuren 6 bis 11 ist ein weiterer erfindungsgemäßer Greifer 70 dargestellt. Die den Greifern 10 und 50 entsprechenden Bauteile sind beim Greifer 70 mit entsprechenden Bezugszeichen versehen.

Das Gehäuse 12 des Greifers 70 weist eine obere Endplatte 72 und eine untere Endplatte 74 auf. Anders als bei den Greifern 10 und 50 sind in den Endplatten 72 und 74 Anschlagaussparungen 76 vorgesehen, in welche backenseitig angeordnete Anschlagzapfen 78 eingreifen. Jede Backe 24 weist insgesamt vier Anschlagzapfen 78 auf. Jeder Anschlagzapfen 78 greift dabei in eine Anschlagaussparung 76 ein, wobei die Anschlagaussparung 76 in Bewegungsrichtung der jeweiligen Backe verlaufend an der Endplatte 72, 74 vorgesehen ist.

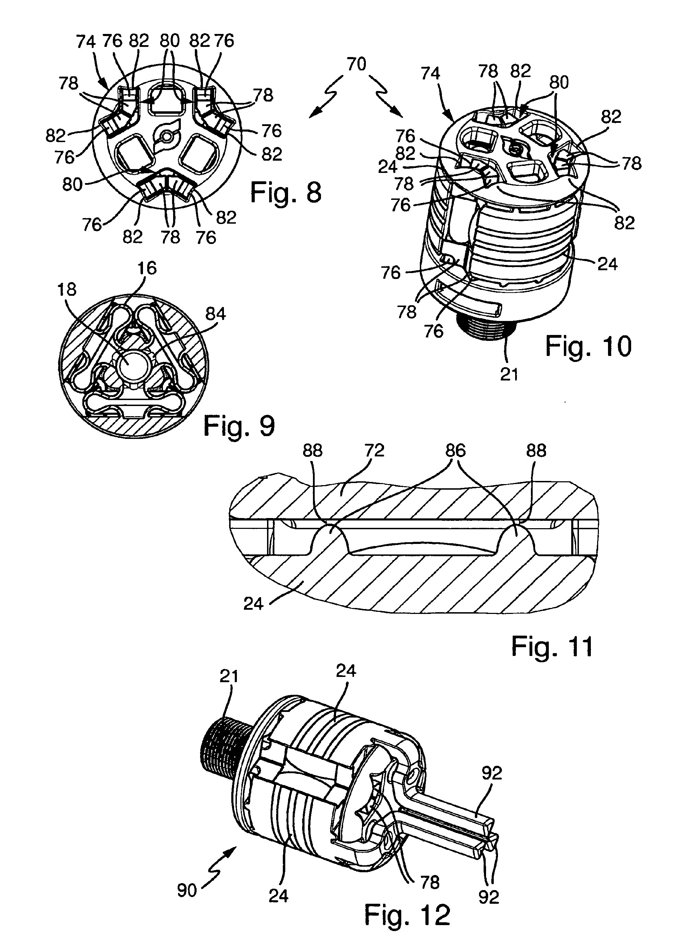

Wie aus den Figuren 8 und 10 deutlich wird, gehen die Anschlagaussparungen 76 benachbarter Anschlagzapfen 78 ineinander über, so dass, wie in Figur 8 und 10 deutlich zu erkennen ist, insgesamt nur drei von den Anschlagaussparungen 76 gebildete Ausnehmungen 80 vorhanden. In den Figuren 8 und 10 ist die untere Endplatte 74 mit den Ausnehmungen 80 gezeigt. Die obere Endplatte weist entsprechende Ausnehmungen beziehungsweise Anschlagaussparungen auf, die in den Figuren nicht im Detail dargestellt sind.

Die Anschlagaussparungen 76 beziehungsweise die Ausnehmungen 80 werden dabei von Anschlagabschnitten 82 begrenzt, die die Ausfahrendlage der jeweiligen Backe 24 definieren. Bewegen sich die Backen also nach radial außen, so ist dies solange möglich, bis die backenseitigen Anschlagzapfen 78 an den die Ausnehmungen 80 begrenzenden Anschlagabschnitten 82 zum Anliegen kommen.

Werden die Backen 24 nach radial innen bewegt, so ist dies so weit möglich, bis die Anschlagzapfen 78 benachbarter Backen 24 gegeneinander wirken beziehungsweise aufeinander treffen. Die Anschlagabschnitte zur Erreichung der Einfahrendlage werden also von den Anschlagzapfen 78 der Backen 24 gebildet.

Wie aus den Schnitten gemäß Figur 7 und 9 deutlich wird sind die Membranen 16 faltenbalgartig ausgebildet. Sie greifen dabei einerends an der Backe 24 und andererends am Gehäuse 12 senkrecht zur Mittellängsachse an.

Beim Greifer 50 sind die Membraninnenräume über Durchgangslöcher 84 mit der Leitung 18 verbunden; bei Druckbeaufschlagung des von der jeweiligen faltenbalgartigen Membran 16 umgebenden Druckraums bewegt sich folglich die zugehörige Backe 24 nach radial außen.

Figur 11 zeigt einen vergrößerten Ausschnitt aus Figur 6, und zwar den der oberen Endplatte 72 zugewandten oberen Abschnitt der Backe 24. Dabei sind an der Backe 24 in axialer Richtung erhabene Stützabschnitte 86 vorgesehen. Zwischen den Stützabschnitte 86 und der oberen Endplatte 72 ist ein vergleichsweise geringer Abstand 88. Entsprechend ist die der unteren Endplatte 74 zugewandte untere Seite der Backen 24 ausgebildet.

Die Stützabschnitte 86 haben den Sinn, dass dann, wenn axiale Kräfte auf die Backen 24 wirken die Stützabschnitte 86 an der oberen beziehungsweise unteren Endplatte 72, 74 zum Anliegen kommen. In axialer Richtung haben die Backen 24 folglich ein vergleichsweise geringes Spiel.

Der in der Figur 12 dargestellte Greifer 90 entspricht im Wesentlichen dem Greifer 50, wobei hier an den Backen einstückig angeformte Greiffinger 92 vorgesehen sind.

## Patentansprüche

1. Loch-Greifer (10, 50, 70, 90) mit einem Gehäuse (12), mit wenigstens einer einen Druckraum (14) begrenzenden, bei Druckbeaufschlagung des Druckraums (14) elastisch verformbaren Membran (16) und mit einer mit der Membran verbundenen Backe (24), wobei die Backe (24) bei Druckbeaufschlagung des Druckraums (14) in radialer Richtung verlagerbar ist, wobei Anschlagabschnitte (32, 34; 52, 54; 82, 78) vorgesehen sind, dass die Backe (24) in radial ausgefahrener Position eine definierte Ausfahrendlage und/oder in radial eingefahrener Position eine definierte Einfahrendlage einnehmen kann, **dadurch gekennzeichnet, dass** das Gehäuse (12), die Membran (16) und die Backe (24) einstückig ausgebildet sind und dass die Anschlagabschnitte (32, 34), die die Ausfahrendlage und/oder die Einfahrendlage bilden, wenigstens abschnittsweise zwischen der Membran (16) und der Backe (24) am Gehäuse (12) vorgesehen sind.

2. Loch-Greifer (10, 50, 70, 90) nach Anspruch 1, **dadurch gekennzeichnet, dass** die Membran (16) über einen Verbindungsabschnitt (22) mit der Backe (24) derart verbunden ist, dass zwischen der Membran (16) und der Backe (24) ein Spaltraum (26, 28, 30) vorgesehen ist.

3. Loch-Greifer (10, 50) nach Anspruch 2, **dadurch gekennzeichnet, dass** die Anschlagabschnitte (32, 34) in den Spaltraum (26) eingreifen und vorzugsweise parallel zur Mittellängsachse (36) des Loch-Greifers verlaufend ausgebildet sind.

4. Loch-Greifer (70, 90) nach mindestens einem der vorhergehenden Ansprüche, **dadurch gekennzeichnet, dass** das Gehäuse (12) eine obere und/oder eine untere Endplatte (72, 74) aufweist, wobei an wenigstens einer Endplatte (72, 74) ein Anschlagabschnitt (82) vorgesehen ist.

5. Loch-Greifer (70, 90) nach Anspruch 4, **dadurch gekennzeichnet, dass** wenigstens eine Endplatte (72, 74) wenigstens eine in Bewegungsrichtung der Backe (24) verlaufende, den Anschlagabschnitt (82) begrenzende Anschlagaussparung (76) aufweist, in welche ein backen- oder membranseitig angeordneter Anschlagzapfen (78) so eingreift, dass er in der Ausfahrendlage und/oder in der Einfahrendlage gegen den Anschlagabschnitt (82) wirkt.

6. Loch-Greifer (70, 90) nach Anspruch 5, **dadurch gekennzeichnet, dass** wenigstens zwei benachbart angeordnete Membranen (16) mit jeweils einer zugehörigen Backe (24) vorgesehen sind, und dass zwei entlang der Bewegungsrichtungen der Backen (24) verlaufende, ineinander übergehende Anschlagaussparungen (76) vorgesehen sind, wobei jede der Backen wenigsten einen Anschlagzapfen (78) aufweist und die Anschlagzapfen (78) der beiden Backen (24) in der Einfahrendlage derart gegeneinander wirken, dass sie gegenseitig die Anschlagabschnitte (82) bilden.

7. Loch-Greifer (10, 50, 70, 90) nach Anspruch 4, 5 oder 6, **dadurch gekennzeichnet, dass** die wenigstens eine Endplatte (72, 74) bzw. Backe (24) auf der der Backe (24) bzw. Endplatte (72, 74) zugewandten Seite in axialer Richtung erhabene Stützabschnitte (86) aufweist.

8. Loch-Greifer (10, 50, 70, 90) nach einem der vorhergehenden Ansprüche, **dadurch gekennzeichnet, dass** die Eigenspannung der Membran (16) derart ist, dass die Backe (24) bei drucklosem Druckraum (14) die Einfahrendlage einnimmt.

9. Loch-Greifer nach einem der vorhergehenden Ansprüche, **dadurch gekennzeichnet, dass** die Membran (16) in der Einfahrendlage Wandabschnitte (60) aufweist, die zwischen dem Gehäuse und der Backe leicht schräg zur Mittellängsachse derart verlaufend angeordnet sind, dass bei Druckbeaufschlagung ein Schnappscheibeneffekt auftritt und die Membran (16) nach radial außen schnappt.

10. Loch-Greifer (50) nach einem der vorhergehenden Ansprüche, **dadurch gekennzeichnet, dass** die Membram (16) in der Einfahrendlage und/oder der Ausfahrendlage am Gehäuse (12) im Wesentlichen parallel zur Mittellängsachse oder leicht schräg dazu angreift und/oder an der Backe (24) im Wesentlichen senkrecht zur Mittellängsachse angreift.

11. Loch-Greifer (70, 90) nach einem der Ansprüche 1 bis 10, **dadurch gekennzeichnet, dass** die Membran (16) in der Einfahrendlage und/oder der Ausfahrendlage im Wesentlichen senkrecht zur Mittellängsachse oder leicht schräg dazu am Gehäuse (12) angreift und dazwischen faltenbalgartig ausgebildet ist.

12. Loch-Greifer (10, 50, 70, 90) nach einem der vorherigen Ansprüche, **dadurch gekennzeichnet, dass** die mit der Membran (16) verbundene Backe (24) in Vorderansicht auf die Backe (24) die Membrane (16) ganz oder wenigstens weitgehend überdeckt.

13. Loch-Greifer (90) nach einem der vorherigen Ansprüche, **dadurch gekennzeichnet, dass** an den Backen (24) einstückig Greiffinger (92) vorgesehen sind.

## Claims

1. A hole gripper (10, 50, 70, 90), having a housing (12), having at least one diaphragm (16) that definines a pressure chamber (14) and is elastically deformable upon pressure imposition by the pressure chamber (14), and having a jaw (24), connected to the diaphragm, the jaw (24) being shiftable in the radial direction upon pressure imposition by the pressure chamber (14), and stop portions (32, 34; 52, 54; 82, 78) are provided, that the jaw (24) in the radially extended position can assume a defined extended terminal position and/or in the radially retracted position can assume a defined retracted terminal position, **characterized in that** the housing (12), the diaphragm (16) and the jaw (24) are embodied in one piece; and that the stop portions (32, 34), which form the extended terminal position and/or the retracted terminal position, are provided in at least some portions between the diaphragm (16) and the jaw (24) on the housing (12).

2. The hole gripper (10, 50, 70, 90) of claim 1, **characterized in that** the diaphragm (16) is connected to the jaw (24) via a connection portion (22) in such a way that a gap space (26, 28, 30) is provided between the diaphragm (16) and the jaw (24).

3. The hole gripper (10, 50) of claim 2, **characterized in that** the stop portions (32, 34) engage the gap space (26) and are preferably embodied extending parallel to the center longitudinal axis (36) of the hole gripper.

4. The hole gripper (70, 90) of at least one of the foregoing claims, **characterized in that** the housing (12) has an upper and/or a lower end plate (72, 74), and on at least one end plate (72, 74), a stop portion (82) is provided.

5. The hole gripper (70, 90) of claim 4, **characterized in that** at least one end plate (72, 74) has at least one stop recess (76), extending in the direction of motion of the jaw (24) and defining the stop portion (82), which stop recess is engaged by a stop peg (78) located on the jaw or on the end of the diaphragm in such a way that in the extended terminal position and/or in the retracted terminal position it acts counter to the stop portion (82).

6. The hole gripper (70, 90) of claim 5, **characterized in that** at least two adjacently located diaphragms (16) are each provided with an associated jaw (24); and that two stop recesses (76), merging with one another and extending in the directions of motion of the jaws (24), are provided, and each of the jaws has at least one stop peg (78), and the stop pegs (78) of the two jaws (24), in the retracted terminal position, act counter to one another in such a way that they mutually form the stop portions (82).

7. The hole gripper (10, 50, 70, 90) of claim 4, 5 or 6, **characterized in that** the at least one end plate (72, 74) and jaw (24), respectively, on the side toward the jaw (24) and the end plate (72, 74), respectively, have bracing portions (86) that are raised in the axial direction.

8. The hole gripper (10, 50, 70, 90) of one of the foregoing claims, **characterized in that** the intrinsic tension of the diaphragm (16) is such that the jaw (24), when the pressure chamber (14) is without pressure, assumes the retracted terminal position.

9. The hole gripper of one of the foregoing claims, **characterized in that** the diaphragm (16), in the retracted terminal position, has wall portions (60) which are located, extending slightly obliquely to the center longitudinal axis, between the housing and the jaw in such a way that upon dog, a snap disc effect occurs, and the diaphragm (16) snaps radially outward.

10. The hole gripper (50) of one of the foregoing claims, **characterized in that** the diaphragm (16), in the retracted terminal position and/or the extended terminal position, grasps the housing (12) essentially parallel to the center longitudinal axis or slightly obliquely to it and/or grasps the jaw (24) essentially perpendicular to the center longitudinal axis.

11. The hole gripper (70, 90) of one of claims 1 through 10, **characterized in that** the diaphragm (16), in the retracted terminal position and/or the extended terminal position, grasps the housing (12) perpendicular to the center longitudinal axis or slightly obliquely to it and in between is embodied in bellowslike fashion.

12. The hole gripper (10, 50, 70, 90) of one of the foregoing claims, **characterized in that** the jaw (24) connected to the diaphragm (16) covers the diaphragms (16) completely, or at least extensively, as seen in a front view on the jaw (24).

13. The hole gripper (90) of one of the foregoing claims, **characterized in that** integral gripper prongs (92) are provided on the jaws (24).

## Revendications

1. Grappin pour trous (10, 50, 70, 90) avec une enceinte (12), avec au moins une membrane (16) délimitant une chambre de pression (14) et élastiquement déformable sous l'action d'une pression de la chambre de pression (14) et avec une mâchoire (24) reliée à la membrane, dans lequel la mâchoire (24) est déplaçable en direction radiale sous l'action de la pression de la chambre de pression (14), dans lequel il est prévu des parties de butée (32, 34; 52, 54; 82, 78) de telle manière que la mâchoire (24) puisse occuper dans la position radialement sortie une position extérieure extrême définie et dans la position radialement rentrée une position intérieure extrême définie, **caractérisé en ce que** l'enceinte (12), la membrane (16) et la mâchoire (24) sont réalisées d'un seul tenant et **en ce que** les parties de butée (32, 34), qui forment la position extérieure extrême et/ou la position intérieure extrême, sont prévues sur l'enceinte (12) au moins en partie entre la membrane (16) et la mâchoire (24).

2. Grappin pour trous (10, 50, 70, 90) selon la revendication 1, **caractérisé en ce que** la membrane (16) est reliée à la mâchoire (24) par une section de liaison (22), de telle manière qu'il soit prévu un espace de séparation (26, 28, 30) entre la membrane (16) et la mâchoire (24).

3. Grappin pour trous (10, 50) selon la revendication 2, **caractérisé en ce que** les parties de butée (32, 34) s'engagent dans l'espace de séparation (26) et sont de préférence orientées parallèlement à l'axe longitudinal central (36) du grappin pour trous.

4. Grappin pour trous (70, 90) selon au moins une des revendications précédentes, **caractérisé en ce que** l'enceinte (12) présente une plaque d'extrémité supérieure et/ou inférieure (72, 74), dans lequel il est prévu une partie de butée (82) sur au moins une plaque d'extrémité (72, 74).

5. Grappin pour trous (70, 90) selon la revendication 4, **caractérisé en ce qu'**au moins une plaque d'extrémité (72, 74) présente au moins une découpe de butée (76) limitant la partie de butée (82) et s'étendant dans la direction de mouvement de la mâchoire (24), dans laquelle un tourillon de butée (78) disposé du côté mâchoire ou du côté membrane s'engage de telle manière qu'il agisse contre la partie de butée (82) dans la position extérieure extrême et/ou dans la position intérieure extrême.

6. Grappin pour trous (70, 90) selon la revendication 5, **caractérisé en ce qu'**il est prévu au moins deux membranes (16) disposées de façon proche avec chacune une mâchoire correspondante (24), et **en ce qu'**il est prévu deux découpes de butée (76) se prolongeant l'une dans l'autre et orientées dans les directions de mouvement des mâchoires (24), dans lequel chacune des mâchoires présente au moins un tourillon de butée (78) et les tourillons de butée (78) des deux mâchoires (24) agissent l'un contre l'autre dans la position intérieure extrême, de telle manière qu'ils forment mutuellement les parties de butée (82).

7. Grappin pour trous (10, 50, 70, 90) selon la revendication 4, 5 ou 6, **caractérisé en ce que** ladite au moins une plaque d'extrémité (72, 74) et/ou une mâchoire (24) présente sur la face tournée vers la mâchoire (24) et/ou la plaque d'extrémité (72, 74) des parties d'appui (86) surélevées en direction axiale.

8. Grappin pour trous (10, 50, 70, 90) selon l'une quelconque des revendications précédentes, **caractérisé en ce que** la tension propre de la membrane (16) est telle que la mâchoire (24) occupe la position intérieure extrême lorsque la chambre de pression (14) est sans pression.

9. Grappin pour trous selon l'une quelconque des revendications précédentes, **caractérisé en ce que** la membrane (16) présente dans la position intérieure extrême des parties de paroi (60), qui sont disposées entre l'enceinte et la mâchoire de façon légèrement inclinée par rapport à l'axe longitudinal central, de telle manière que sous l'action de la pression il se produise un effet de déclic et que la membrane (16) s'encliquète radialement vers l'extérieur.

10. Grappin pour trous (50) selon l'une quelconque des revendications précédentes, **caractérisé en ce que** la membrane (16), dans la position intérieure extrême et/ou la position extérieure extrême, s'applique sur l'enceinte (12) essentiellement parallèlement à l'axe longitudinal central ou légèrement en oblique par rapport à celui-ci et/ou s'applique sur la mâchoire (24) essentiellement perpendiculairement à l'axe longitudinal central.

11. Grappin pour trous (70, 90) selon l'une quelconque des revendications 1 à 10, **caractérisé en ce que** la membrane (16), dans la position intérieure extrême et/ou la position extérieure extrême, s'applique sur l'enceinte (12) essentiellement perpendiculairement à l'axe longitudinal central ou légèrement en oblique par rapport à celui-ci et se présente entre celles-ci comme un soufflet à plis.

12. Grappin pour trous (10, 50, 70, 90) selon l'une quelconque des revendications précédentes, **caractérisé en ce que** la mâchoire (24) reliée à la membrane (16) recouvre entièrement ou au moins largement la membrane (16) dans une vue avant.

13. Grappin pour trous (90) selon l'une quelconque des revendications précédentes, **caractérisé en ce qu'**il est prévu sur les mâchoires (24) des doigts de prise (92) d'un seul tenant.
